(19) Europäisches Patentamt / European Patent Office / Office européen des brevets

(11) **EP 3 820 020 A1**

(12) **EUROPEAN PATENT APPLICATION**
published in accordance with Art. 153(4) EPC

(43) Date of publication:
**12.05.2021 Bulletin 2021/19**

(21) Application number: **19848756.3**

(22) Date of filing: **05.08.2019**

(51) Int Cl.:
**H02J 7/04** (2006.01)

(86) International application number:
**PCT/CN2019/099210**

(87) International publication number:
**WO 2020/029904 (13.02.2020 Gazette 2020/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2018 CN 201810882800**

(71) Applicant: **Xi'an Zhongxing New Software Co., Ltd.
Shaanxi 710114 (CN)**

(72) Inventors:
• **XUE, Yuan
  Shenzhen, Guangdong 518057 (CN)**
• **CHEN, Tao
  Shenzhen, Guangdong 518057 (CN)**
• **WANG, Jiancheng
  Shenzhen, Guangdong 518057 (CN)**

(74) Representative: **WBH Wachenhausen
Patentanwälte PartG mbB
Müllerstraße 40
80469 München (DE)**

(54) **WIRELESS CHARGING METHOD AND APPARATUS, CIRCUIT, AND COMPUTER STORAGE MEDIUM**

(57) A wireless charging method, apparatus and circuit, and a computer storage medium are disclosed. The wireless charging apparatus detects a current input current of a transmitting coil (S101); an input voltage of the transmitting coil is regulated according to a set voltage regulation amplitude in response to determining that the current input current is greater than a current threshold, until the regulated input current is not greater than the current threshold or the input voltage corresponding to the regulated input current is not less than a voltage threshold (SI02); and the regulated input current is determined as a target input current (S103).

FIG. 1

EP 3 820 020 A1

**Description**

**TECHNICAL FIELD**

The present disclosure relates to, but is not limited to, the field of wireless charging technology.

**BACKGROUND**

Wireless charging technology is increasingly applied in mobile terminals, for example, wearable smart devices, and some smart phones also use wireless charging technology for charging.

**SUMMARY**

In an aspect according to embodiments of the present disclosure, a wireless charging method is provided, including: detecting by a wireless charging apparatus a current input current of a transmitting coil; regulating an input voltage of the transmitting coil according to a set voltage regulation amplitude in response to determining that the current input current is greater than a current threshold until the regulated input current is not greater than the current threshold or the input voltage corresponding to the regulated input current is not less than a voltage threshold; and determining the regulated input current as a target input current.

In another aspect according to embodiments of the present disclosure, there is provided a wireless charging apparatus configured to: detect a current input current of a transmitting coil; regulate an input voltage of the transmitting coil according to a set voltage regulation amplitude in response to determining that the current input current is greater than a current threshold, until the regulated input current is not greater than the current threshold or the input voltage corresponding to the regulated input current is not less than a voltage threshold; and determine the regulated input current as a target input current.

In yet another aspect according to embodiments of the present disclosure, there is provided another wireless charging apparatus including: a processor and a memory for storing a computer program capable of running on the processor, the processor is configured to, when running the computer program, perform the wireless charging method according to the present disclosure.

In yet another aspect according to embodiments of the present disclosure, there is provided a wireless charging circuit including: the wireless charging apparatus according to the present disclosure, a DC voltage regulation circuit and a current detection circuit which are connected to the wireless charging apparatus, the wireless charging apparatus is configured to output the target input current by controlling the DC voltage regulation circuit.

In yet another aspect according to embodiments of the present disclosure, there is provided another wireless charging circuit including: the wireless charging apparatus according to the present disclosure, an AC voltage regulation circuit and a current detection circuit which are connected to the wireless charging apparatus, the wireless charging apparatus is configured to output the target input current by controlling the AC voltage regulation circuit.

In yet another aspect according to embodiments of the present disclosure, there is provided a computer storage medium storing a computer program which, when executed by a processor, causes the processor to perform the wireless charging method of the present disclosure.

**BRIEF DESCRIPTION OF DRAWINGS**

Fig. 1 is a flow diagram of a wireless charging method according to an embodiment of the present disclosure.

Fig. 2 is a schematic structural diagram of a wireless charging apparatus according to an embodiment of the present disclosure.

Fig. 3 is a schematic structural diagram of a wireless charging circuit according to an embodiment of the present disclosure.

Fig. 4 is a schematic structural diagram of a wireless charging system according to an embodiment of the present disclosure.

Fig. 5 is a schematic structural diagram of a direct-current (DC) voltage regulation circuit according to an embodiment of the present disclosure.

Fig. 6 is another schematic structural diagram of a wireless charging circuit according to an embodiment of the present disclosure.

Fig. 7 is a schematic structural diagram of another wireless charging circuit according to an embodiment of the present disclosure.

Fig. 8 is another schematic structural diagram of another wireless charging circuit according to an embodiment of the present disclosure.

Fig. 9 is a flow diagram of a wireless charging method implemented by a wireless charging circuit including a DC voltage regulation circuit according to an embodiment of the present disclosure.

Fig. 10 is a flow diagram of a wireless charging method implemented by a wireless charging circuit including an alternate-current (AC) voltage regulation circuit according to an embodiment of the present disclosure.

## DETAILED DESCRIPTION

The present disclosure will be further described in detail with reference to the drawings and embodiments.

Wireless charging technology is increasingly applied in mobile terminals. At present, most terminal products in the market with a wireless charging power less than 5W at a receiving end has gradually begun to withdraw from the market due to slow charging rate and poor user experience. Wireless charging with medium power (greater than 5W and less than or equal to 15W) at the receiving end is introduced according to the latest standard in wireless power consortium. However, wireless charging with medium power will inevitably increase the charging current, which will inevitably be accompanied by serious heat generation problems in practical application. Due to the rapid temperature rise and abnormally high temperature of coils, long-time wireless charging cannot be realized.

Therefore, the heat generation problems during wireless charging has become a major obstacle to the promotion and development of wireless charging. How to reduce the heat generated during wireless charging and prolong the time of wireless charging is an urgent problem to be solved in the field of wireless charging technology.

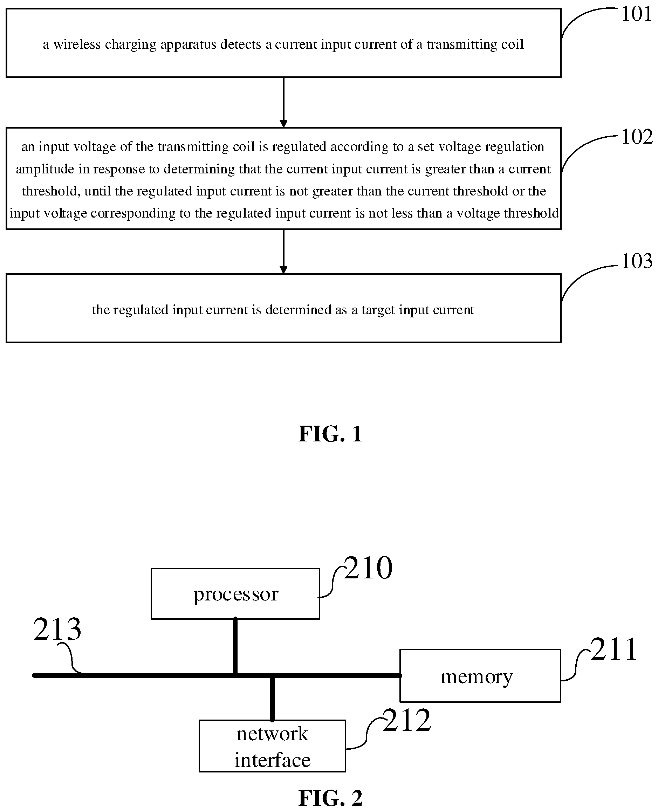

As shown in Fig. 1, which is a flow diagram of a wireless charging method according to an embodiment of the present disclosure, the wireless charging method includes steps of S101 to S103.

In a step of S101, a wireless charging apparatus detects a current input current of a transmitting coil.

According to an embodiment of the present disclosure, before step S 101, the method may further include: determining by the wireless charging apparatus that the wireless charging apparatus is connected to a load device.

According to an embodiment of the present disclosure, determining that the wireless charging apparatus is connected to a load device may refer to that the wireless charging apparatus detects that there is a load device being charged wirelessly. Herein, the load device may be a smart phone or a wearable smart device supporting wireless charging.

According to an embodiment of the present disclosure, when it is determined that the wireless charging apparatus is connected to the load device, a charging power supported by the load device may be detected, thereby generating a current input voltage and a current input current corresponding to the charging power, and the wireless charging apparatus detects the current input current of the transmitting coil.

In a step of S102, an input voltage of the transmitting coil is regulated according to a set voltage regulation amplitude in response to determining that the current input current is greater than a current threshold, until the regulated input current is not greater than the current threshold or the input voltage corresponding to the regulated input current is not less than a voltage threshold.

According to an embodiment of the present disclosure, the current threshold may be a preset value, for example, $i_{th}$. When it is detected that the current input current is greater than the current threshold $i_{th}$, the input voltage is regulated according to the set voltage regulation amplitude.

According to an embodiment of the present disclosure, a status where the regulated input current is not greater than the current threshold or the input voltage corresponding to the regulated input current is not less than the voltage threshold may refer to that one of the input current and the input voltage meets the corresponding setting condition, that is, either the input current being less than or equal to the current threshold or the input voltage being regulated to (i.e., not less than) the rated voltage $V_{max}$.

The voltage regulation amplitude may be set by taking a voltage value $\Delta$ as the voltage regulation amplitude for each time. For example, if the current input voltage is V, when it is detected that the current input current is greater than $i_{th}$, the wireless charging apparatus increases the input voltage to a voltage value $V_1$ by the set voltage regulation amplitude $\Delta$, where $V_1 = V + \Delta$, and the input current decreases at this time.

The input current is detected again, and when it is detected that the input current is less than or equal to the current threshold, it is considered that the current in the transmitting coil is appropriate and the heat generated by the coil can be reduced to an acceptable range.

According to an embodiment of the present disclosure, the input current is detected, and when it is detected that the input current is still greater than the current threshold, the wireless charging apparatus may increase the input voltage to a voltage value $V_2$ by the set voltage regulation amplitude $\Delta$, where $V_2 = V_1 + \Delta$, so that the current entering the transmitting coil will be further reduced; then whether the input current at this time is less than or equal to the current threshold is detected again. The above process of detecting the input current, judging whether the input current is less than or equal to the current threshold, and regulating the input voltage by the set voltage regulation amplitude $\Delta$ is cycled, until it is detected that the current entering the transmitting coil is less than or equal to $i_{th}$ or the voltage has increased to (or possibly exceeded) the rated maximum voltage $V_{max}$.

In a step of S103, the regulated input current is determined as a target input current.

According to an embodiment of the present disclosure, determining the regulated input current as a target input current refers to determining the input current corresponding to a time point when it is detected that the current entering the transmitting coil is less than or equal to $i_{th}$ or the voltage has increased to (or possibly exceeded) the rated maximum voltage $V_{max}$ as the target input current.

According to the wireless charging method provided by an embodiment of the present disclosure, by means of regulating one of the input current and the input voltage of the transmitting coil to meet the corresponding set condition, on the one hand, the input current can be reduced by increasing the voltage value of the input voltage to greatly reduce the heat generated by the coil; on the other hand, the wireless charging efficiency can be improved on the premise of reducing heat generated by the coil by setting a reasonable voltage regulation amplitude and a threshold of the input current, and finally, when wireless charging is carried out at a relatively high power, the fast wireless charging in the whole charging process can be completed without being restricted by heat generated by the coil.

According to an embodiment of the present disclosure, step S102 may include: cyclically executing the following steps in response to determining that the current input current is greater than the current threshold, until it is determined that the regulated input current is equal to or less than the current threshold or the input voltage corresponding to the regulated input current is not less than the voltage threshold: increasing the input voltage of the transmitting coil by taking the set voltage regulation amplitude as a step size; detecting the regulated input current and the input voltage corresponding to the regulated input current; judging whether the regulated input current is equal to or less than the current threshold; and judging whether the input voltage corresponding to the regulated input current is not less than the current threshold.

According to an embodiment of the present disclosure, the current threshold may be a preset value, for example, $i_{th}$. When it is detected that the current input current is greater than the current threshold $i_{th}$, the input voltage is increased by the set voltage regulation amplitude, and the changes of the input current and the input voltage are detected in real time.

The voltage regulation amplitude may be set by taking a voltage value $\Delta$ as the voltage regulation amplitude for each time. For example, if the current input voltage is V, when it is detected that the current input current is greater than $i_{th}$, the wireless charging apparatus increases the input voltage to a voltage value $V_1$ by the set voltage regulation amplitude $\Delta$, where $V_1 = V + \Delta$, and the current corresponding to the input voltage $V_1$ is $I_1$ at this time.

The input current $I_1$ is detected, and when it is detected that the input current $I_1$ is less than or equal to the current threshold $i_{th}$, it is considered that the current in the transmitting coil is appropriate and the heat generated by the coil can be reduced to an acceptable range.

According to an embodiment of the present disclosure, the input current value is detected, and when it is detected that the input current is still greater than the current threshold $i_{th}$, the wireless charging apparatus increases the input voltage to a voltage value $V_2$ by the set voltage regulation amplitude $\Delta$, where $V_2 = V_1 + \Delta$, so that the current entering the transmitting coil will be further reduced to $I_2$; then whether the input current $I_2$ is less than or equal to the current threshold $i_{th}$ is detected.

According to an embodiment of the present disclosure, the voltage threshold may be a preset value, for example, a rated maximum voltage $V_{max}$ at the charging power corresponding to the load device.

According to an embodiment of the present disclosure, when it is determined that the input current I is greater than the current threshold $i_{th}$ and the input voltage V is lower than the voltage threshold $V_{max}$, the input voltage is further increased by the voltage regulation amplitude; and input voltage regulating will not be stopped until the input current is equal to or less than the current threshold, or the input voltage is equal to or greater than the voltage threshold and the input current is greater than the current threshold.

According to the wireless charging method provided by an embodiment of the disclosure, when it is determined that the current input current is greater than the current threshold, the input voltage is increased by the set voltage regulation amplitude, and the changes of the input current and the input voltage are detected in real time, so that on the premise of ensuring that the input voltage of the wireless coil reaches the rated voltage, the input current entering the wireless coil is maximally reduced, thereby greatly reducing the heat generated by the transmitting coil.

According to an embodiment of the present disclosure, step S102 may include: regulating the input voltage of the transmitting coil according to the set voltage regulation amplitude in response to determining that the current input current is greater than the current threshold, until the regulated input current is less than or equal to the current threshold and the input voltage corresponding to the regulated input current is not greater than the voltage threshold.

According to an embodiment of the present disclosure, step S102 may include: regulating the input voltage of the transmitting coil according to the set voltage regulation amplitude in response to determining that the current input current is greater than the current threshold, until the regulated input current is greater than the current threshold and the input voltage corresponding to the regulated input current is not less than the voltage threshold.

According to an embodiment of the present disclosure, the current threshold may be a preset value, for example, $i_{th}$. The voltage regulation amplitude may be set by taking a voltage value $\Delta$ as the voltage regulation amplitude for each time. For example, if the current input voltage is V, when it is detected that the current input current is greater than $i_{th}$, the wireless charging apparatus increases the input voltage to a voltage value $V_1$ by the set voltage regulation amplitude $\Delta$, where $V_1 = V + \Delta$.

According to an embodiment of the present disclosure, when it is determined that the current input current is greater than the current threshold, regulating the input voltage by the set voltage regulation amplitude until the input current is less than or equal to the current threshold refers to regulating the input voltage by the set voltage regulation amplitude $\Delta$ until it is detected that the current entering the transmitting coil is less than or equal to $i_{th}$.

According to an embodiment of the present disclosure, when it is determined that the current input current is greater than the current threshold, regulating the input voltage by the set voltage regulation amplitude until the input voltage is equal to the voltage threshold and the input current is greater than the current threshold refers to regulating the input voltage by the set voltage regulation amplitude $\Delta$ until it is detected that the voltage has increased to the rated maximum voltage $V_{max}$ and the input current is greater than the current threshold $i_{th}$.

According to the wireless charging method provided by an embodiment of the present disclosure, on the premise of ensuring that the input voltage of the wireless coil is not greater than the rated voltage, the input current entering the wireless coil is maximally reduced, thereby greatly reducing the heat generated by the transmitting coil.

According to an embodiment of the present disclosure, a wireless charging apparatus is further provided, which is configured to: detect a current input current of a transmitting coil; regulate an input voltage of the transmitting coil according to a set voltage regulation amplitude in response to determining that the current input current is greater than a current threshold, until the regulated input current is not greater than the current threshold or the input voltage corresponding to the regulated input current is not less than a voltage threshold; and determine the regulated input current as a target input current.

By means of detecting that one of the input current and the input voltage of the transmitting coil meets the corresponding set condition, on the one hand, the coil current can be reduced by increasing the voltage of the transmitting coil, thereby greatly reducing the heat generated by the transmitting coil; on the other hand, the wireless charging efficiency can be greatly improved by setting a reasonable voltage regulation amplitude and a threshold of the input current, and finally, when wireless charging is carried out at a relatively high power, the fast wireless charging in the whole charging process can be completed without being restricted by the heat generated by the transmitting coil.

According to an embodiment of the present disclosure, the wireless charging apparatus may be further configured to, cyclically execute the following steps in response to determining that the current input current is greater than the current threshold, until it is determined that the regulated input current is equal to or less than the current threshold or the input voltage corresponding to the regulated input current is not less than the voltage threshold: increasing the input voltage of the transmitting coil by taking the set voltage regulation amplitude as a step size; detecting the regulated input current and the input voltage corresponding to the regulated input current; judging whether the regulated input current is equal to or less than the current threshold; and judging whether the corresponding to the regulated input current is not less than the current threshold.

According to an embodiment of the present disclosure, the wireless charging apparatus may be further configured to regulate the input voltage of the transmitting coil according to the set voltage regulation amplitude in response to determining that the current input current is greater than the current threshold, until the regulated input current is less than or equal to the current threshold and the input voltage corresponding to the regulated input current is not greater than the voltage threshold.

According to an embodiment of the present disclosure, the wireless charging apparatus may be further configured to regulate the input voltage of the transmitting coil according to the set voltage regulation amplitude in response to determining that the current input current is greater than the current threshold, until the regulated input current is greater than the current threshold and the input voltage corresponding to the regulated input current is not less than the current threshold.

According to an embodiment of the present disclosure, another wireless charging apparatus is further provided, as shown in Fig. 2, which is a schematic structural diagram of the wireless charging apparatus. The wireless charging apparatus includes: at least one processor 210 and a memory 211 for storing a computer program capable of running on the processor 210. The processor 210 illustrated in Fig. 2 is not used to indicate the number of processors as one, but only to indicate the positional relationship of the processor relative to other devices. In practical applications, the number of processors may be one or more. Similarly, the memory 211 illustrated in Fig. 2 is only used to indicate the positional relationship of the memory relative to other devices. In practical applications, the number of memories may be one or more.

When running the computer program, the processor 210 executes the following steps: detecting a current input current of a transmitting coil; regulating an input voltage of the transmitting coil according to a set voltage regulation amplitude in response to determining that the current input current is greater than a current threshold, until the regulated input current is not greater than the current threshold or the input voltage corresponding to the regulated input current is not less than a voltage threshold; and determining the regulated input current as a target input current.

According to an embodiment of the present disclosure, when running the computer program, the processor 210 may also execute the following steps: cyclically executing the following steps in response to determining that the current input current is greater than the current threshold, until it is determined that the regulated input current is equal to or less than the current threshold or the input voltage corresponding to the regulated input current is not less than the voltage threshold: increasing the input voltage of the transmitting coil by taking the set voltage regulation amplitude as a step size; detecting the regulated input current and the input voltage corresponding to the regulated input current; judging whether the regulated input current is equal to or less than the current threshold; and judging whether the input voltage corresponding to the regulated input current is not less than the voltage threshold.

According to an embodiment of the present disclosure, when running the computer program, the processor 210 may further execute the following step: regulating the input voltage of the transmitting coil according to the set voltage regulation amplitude in response to determining that the current input current is greater than the current threshold, until the regulated input current is less than or equal to the current threshold and the input voltage corresponding to the regulated input current is not greater than the voltage threshold.

According to an embodiment of the present disclosure, when running the computer program, the processor 210 may further execute the following step: regulating the input voltage of the transmitting coil according to the set voltage regulation amplitude in response to determining that the current input current is greater than the current threshold, until the regulated input current is greater than the current threshold and the input voltage corresponding to the regulated input current is not less than the voltage threshold.

The wireless charging apparatus may further include at least one network interface 212. The components in the wireless charging apparatus are coupled together through a bus system 213. It can be understood that the bus system 213 is used to implement the communication connection between these components. The bus system 213 includes a power bus, a control bus and a status signal bus in addition to a data bus. However, for the sake of clarity, these buses are labeled as the bus system 213 in Fig. 2.

According to an embodiment of the present disclosure, the memory 211 may be a volatile memory or a non-volatile memory, or may include both a volatile memory and a non-volatile memory. The non-volatile memory may be a read-only memory (ROM), a programmable read-only memory (PROM), an erasable programmable read-Only memory (EPROM), an electrically erasable programmable read-only memory (EEPROM), a ferromagnetic random access memory (FRAM), a flash memory, a magnetic surface memory, an optical disc, or a compact disc read-only memory (CD-ROM). The magnetic surface memory may be a magnetic disk memory or a magnetic tape memory. The volatile memory may be a random access memory (RAM) that functions as an external cache. By way of example, but not limitation, many forms of RAMs may be used, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), syncLink dynamic random access memory (SLDRAM), direct rambus random access memory (DRRAM). The memory 211 described in an embodiment of the present disclosure is intended to include, but not limited to, these and any other suitable types of memory.

The memory 211 in an embodiment of the present disclosure is configured to store various types of data to support operation of a wireless charging apparatus. Examples of such data include any computer program for operating on a wireless charging apparatus, such as an operating system and applications. The operating system includes various system programs, such as a framework layer, a core library layer, a driver layer, and the like, for implementing various basic services and processing hardware-based tasks. The applications may include various applications for implementing various application services. Here, a program for implementing the wireless charging method according to the embodiment of the present disclosure may be included in an application.

According to an embodiment of the present disclosure, a computer storage medium is further provided, including a memory 211 storing a computer program executable by a processor 210 in a wireless charging apparatus to perform the foregoing method. The computer storage medium may be FRAM, ROM, PROM, EPROM, EEPROM, flash memory, magnetic surface memory, optical disk, CD-ROM, or the like. It may also be various devices including one or any combination of the above memories, such as a smartphone, a wearable smart device, a wireless charging device, and the like. A computer program is stored in the computer storage medium, and the computer program, when executed by a processor, causes the processor to: detect a current input current of a transmitting coil; regulate an input voltage of the transmitting coil according to a set voltage regulation amplitude in response to determining that the current input current is greater than a current threshold, until the regulated input current is not greater than the current threshold or the input voltage corresponding to the regulated input current is not less than a voltage threshold; and determine the regulated input current as a target input current.

According to an embodiment of the present disclosure, the computer program, when executed by a processor, causes the processor to: cyclically execute the following steps in response to determining that the current input current is greater than the current threshold, until it is determined that the regulated input current is equal to or less than the current threshold or the input voltage corresponding to the regulated input current is not less than the voltage threshold: increasing the input voltage of the transmitting coil by taking the set voltage regulation amplitude as a step size; detecting the regulated input current and the input voltage corresponding to the regulated input current; judging whether the regulated input current is equal to or less than the current threshold; and judging whether the input voltage corresponding to the regulated input current is not less than the voltage threshold.

According to an embodiment of the present disclosure, the computer program, when executed by a processor, causes the processor to: regulate the input voltage of the transmitting coil according to the set voltage regulation amplitude in response to determining that the current input current is greater than the current threshold, until the regulated input current is less than or equal to the current threshold and the input voltage corresponding to the regulated input current is not greater than the voltage threshold.

According to an embodiment of the present disclosure, the computer program, when executed by a processor, causes the processor to: regulate the input voltage of the transmitting coil according to the set voltage regulation amplitude in response to determining that the current input current is greater than the current threshold, until the regulated input current is greater than the current threshold and the input voltage corresponding to the regulated input current is not less than the voltage threshold.

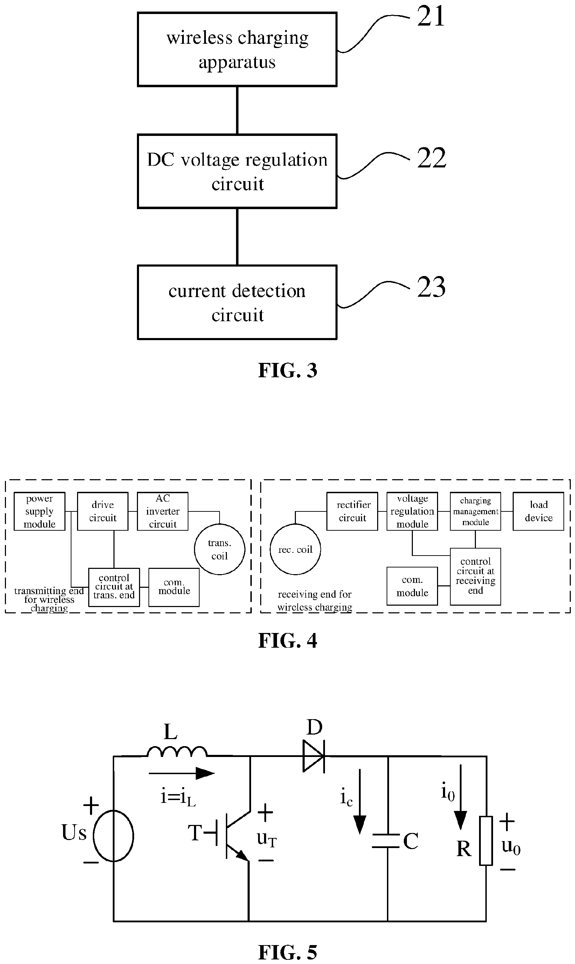

According to an embodiment of the present disclosure, a wireless charging circuit is further provided, as shown in Fig. 3, which is a schematic structural diagram of the wireless charging circuit according to an embodiment of the present disclosure. The implementation of the wireless charging method according to the present disclosure will be further explained by taking the wireless charging circuit including the wireless charging apparatus provided by the foregoing embodiments of the present disclosure as an example. The wireless charging circuit may be used for a transmitting end for wireless charging, and may include a wireless charging apparatus 21, a DC voltage regulation circuit 22 and a current detection circuit 23 which are connected to the wireless charging apparatus 21. The wireless charging apparatus 21 outputs a target input current by controlling the DC voltage regulation circuit 22.

Fig. 4 is a schematic structural diagram of a wireless charging system. The wireless charging system may include a transmitting end for wireless charging and a receiving end for wireless charging. The transmitting end for wireless charging may include a power supply module, a drive circuit, an AC inverter circuit, a transmitting coil, a control circuit at the transmitting end and a communication module. The power supply module may be a charger. The drive circuit is connected to the AC inverter circuit and is responsible for driving the switch transistors and other components in the AC inverter circuit. The AC inverter circuit may be a half-bridge inverter circuit or a full-bridge inverter circuit. The AC inverter circuit may be configured to invert DC into AC. The control circuit at the transmitting end may be configured to control the AC inverter circuit. The receiving end for wireless charging may include a receiving coil, a rectifier circuit, a voltage regulation module, a charging management module, a load device, a control circuit at the receiving end and a communication module. The receiving coil may be configured to send wireless signals to and receive wireless signals from the transmitting coil by generating magnetic induction. The rectifier circuit may be configured to convert AC into DC, and the voltage regulation module may be configured to regulate the DC voltage to an input voltage value allowed by the load device. The control circuit at the receiving end is connected to the voltage regulation module, the charging management module and the communication module, which may be configured for controlling of the voltage regulation after rectification, the control signal of the charging management module, and the information interaction with the communication module, etc. The charging management module manages the charging process and path of the load device. The communication module may be configured to complete information transmission between the control circuit at the receiving end and the transmitting end for wireless charging. However, when a relatively high current, such as a current above 1A, directly enters the transmitting coil and is coupled to the receiving coil, the charging current flowing through the coils will always be relatively large, resulting in extremely serious heat generation by the coils at both ends. At present, all wireless charging products are facing the same problem. Serious heat generation by the coil will restrict wireless charging efficiency and charging time, and even hinder the development of fast wireless charging.

In some embodiments, when the wireless charging apparatus detects a connection with the load device, it may detect the charging power supported by the load device, so as to generate the input voltage and input current of the transmitting coil corresponding to the charging power. For example, the load device supports a charging power of 5W, the maximum input current is 1A, both the transmitting coil and the receiving coil have an internal resistance of r, and the adapter parameter is 5V/1A.

$$P = U \times I \qquad\qquad (1)$$

According to formula (1), the output power of the power supply module is P=5W, the initial input voltage of the transmitting coil is 5V, and the initial input current of the transmitting coil is 1A.

According to formula (1), the output power of the power supply module is P=5W, and the heat loss generated in the coil is $P_1 = I^2 \times r = r$ according to formula (2).

$$P = I^2 \times R \qquad\qquad (2)$$

If the DC voltage of the coil at the transmitting end is increased to 10V, since the power P input by the adapter is constant, it can be obtained from the energy conservation and formula (1) that the current entering the coil drops to 0.5A, and the heat loss generated in the transmitting coil is $P_2 = 0.5^2 \times r = 0.25r$ at this time.

Therefore, theoretically, the heat generated by the transmitting end coil is only 25% of the original value after the voltage is increased, and the current flowing through the receiving coil is also 25% of the original value after the voltage electromagnetic coupling of the coils at the transmitting end and the receiving end, so that the heat generated by the coil in the wireless charging process will be greatly reduced.

According to the wireless charging circuit provided by an embodiment of the present disclosure, by adding the DC voltage regulation circuit 22 and the current detection circuit 23 at the transmitting end for wireless charging, the DC voltage regulation circuit 22 gradually increases the input voltage entering the transmitting coil, and the current detection circuit 23 continuously feeds back the input current in the transmitting coil, so as to determine the input current corresponding to a time point when the set condition is met as the target input current. In this way, the heat generated by the transmitting coil is greatly reduced.

According to an embodiment of the present disclosure, the DC voltage regulation circuit 22 may be easily implemented in the form of a circuit design or directly using a DC boost chip. Fig. 5 is a schematic structural diagram of the DC voltage regulation circuit 22. In Fig. 5, boost DC-DC circuit is taken as an example to illustrate the principle with a simplified circuit.

As shown in Fig. 5, Us is an input voltage, Uo is an output voltage, R is a system load, L is an energy-storage inductor, D is a freewheeling diode, and C is a filter capacitor. When a switch transistor T is turned on, the current forms a loop through Us→L→T→Us, and the energy is stored in the inductor L. When the switch transistor T is turned off, due to the fact that the current in the inductor L cannot suddenly change and the effect of the freewheeling diode D, the current forms a loop through Us→L→D→C and R→Us. At this time, the input voltage Us and the energy stored in the inductor L are superimposed to supply power to a load end, so that the output voltage Uo is increased.

With the repeated switching of turn-on (Ton)/turn-off (Toff) of the switch transistor, a continuous flow of energy can be obtained at the load end. As long as the turn-on and turn-off frequencies are high enough, and the voltage ripple at the load end is small enough through the filtering effect of large inductor L and large capacitor C, the output Uo may be considered as approximately constant.

In steady state, the average voltage across the inductor for one period is zero, i.e.:

$$U_s \times T_{on} + (U_s - U_o) \times T_{off} = 0 \qquad\qquad (3)$$

$$\Rightarrow U_o = \frac{T_{on} + T_{off}}{T_{off}} \times U_s \qquad\qquad (4)$$

$$\text{let: } d = \frac{T_{on}}{T_{on} + T_{off}} \qquad\qquad (5)$$

where d is duty cycle and $T_{on} + T_{off} = 1$ is known, then:

$$U_o = \frac{1}{1-d} U_s \qquad\qquad (6)$$

It can be seen that the required voltage output can be obtained by selecting the appropriate duty cycle of the switch transistor, so that the regulation of the input voltage of the transmitting coil according to the set voltage regulation amplitude is realized.

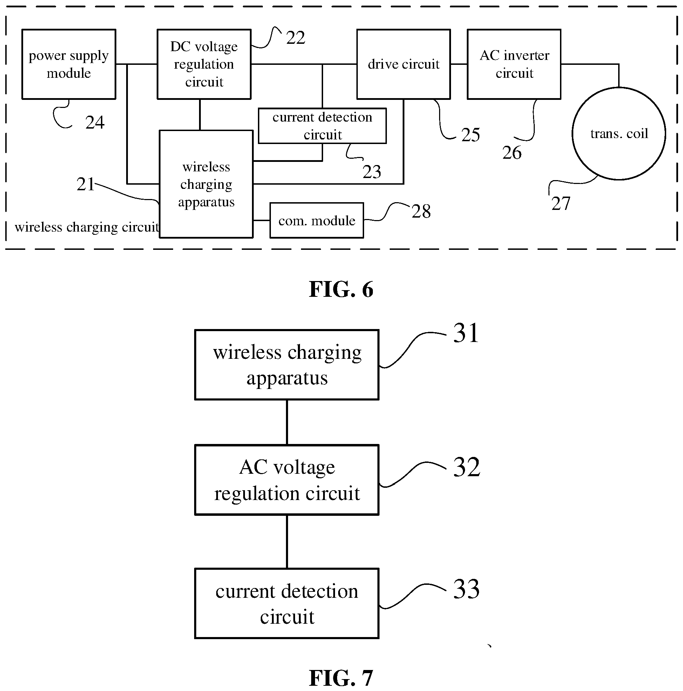

Fig. 6 is another schematic structural diagram of the wireless charging circuit according to an embodiment of the present disclosure. According to an embodiment of the present disclosure, as shown in Fig. 6, the wireless charging circuit may further include a power supply module 24, a drive circuit 25, an AC inverter circuit 26, a transmitting coil 27, and a communication module 28. The power supply module 24, the DC voltage regulation circuit 22, the drive circuit 25, the AC inverter circuit 26 and the transmitting coil 27 are connected in sequence, and the wireless charging apparatus 21 is connected to the power supply module 24, the drive circuit 25 and the communication module 28, respectively.

According to an embodiment of the present disclosure, for the charging power requirements of different load devices, the wireless charging apparatus 21 of the wireless charging circuit may actively regulate and control the DC voltage regulation circuit 22, detect and feed back the current entering the transmitting coil 27 through the current detection circuit 23, and regulate the input voltage of the transmitting coil by the set voltage regulation amplitude until one of the input current and the input voltage of the transmitting coil meets the corresponding set condition, so as to determine the input current corresponding to a time point when the set condition is met as the target current.

According to an embodiment of the present disclosure, the wireless charging apparatus 21 is connected to the DC voltage regulation circuit 22, the current detection circuit 23, the drive circuit 25 and the communication module 28 respectively, and is mainly responsible for controlling the DC voltage regulation circuit 22 to output the corresponding voltage, controlling the drive circuit 25 to realize AC inversion, collecting feedback signals from the current detection circuit 23 and making corresponding control actions, and performing information interaction and processing with the communication module 28. The current detection circuit 23 may detect the input current of the transmitting coil after boosting, and feed back the detected value to the wireless charging apparatus 21. The drive circuit 25 is connected to the AC inverter circuit 26, and is responsible for driving the switch transistors and other components in the AC inverter circuit 26. The AC inverter circuit 26 inverts DC into AC. In this way, the energy is transmitted between the transmitting coil and the receiving coil in a high-voltage and low-current manner, which not only ensures the transmission power unchanged, but also greatly reduces the heat generated by the coil, thus solving the problem of excessive heat generated by the wireless charging coil, and ensuring that the fast wireless charging will not exit because of over-high temperature of the coil when the load is charged with high power.

According to an embodiment of the present disclosure, another wireless charging circuit is further provided, as shown in Fig. 7, which is a schematic structural diagram of the wireless charging circuit. The wireless charging circuit may be applied to a transmitting end for wireless charging, and may include a wireless charging apparatus 31, an AC voltage regulation circuit 32 and a current detection circuit 33 which are connected to the wireless charging apparatus 31. The wireless charging apparatus 31 outputs a target input current by controlling the AC voltage regulation circuit 32.

According to an embodiment of the present disclosure, by adding the AC voltage regulation circuit 32 and the current detection circuit 33 at the transmitting end for wireless charging, the AC voltage regulation circuit 32 gradually increases the voltage of the transmitting coil according to the charging power requirements of different load devices, and the current detection circuit 33 continuously feeds back the current in the transmitting coil, so as to determine the input current corresponding to a time point when the set condition is met as the target input current. In this way, the heat generated by the transmitting coil is greatly reduced.

According to an embodiment of the present disclosure, the AC voltage regulation circuit 32 may be easily implemented in the form of a circuit design or directly using an AC voltage boost chip, and the principle of directly boosting the AC by using the AC voltage regulation circuit is relatively simple. Herein, a conversion of AC of one voltage level into AC of another voltage level with the same frequency through the electromagnetic induction between coils is taken as an example.

Suppose that the voltage across the primary winding and the secondary winding of the transformer is $u_{1N}$ and $u_{2N}$ respectively. When AC voltage $u_{1N}$ is applied to the primary winding, an alternating current will be generated in the primary winding, and an alternating magnetic field will be established. According to the principle of electromagnetic induction, the alternating magnetic field will generate an induced electromotive force $e_1$ in the primary winding and an induced electromotive force $e_2$ in the secondary winding, respectively.

Proportional relation formula (7) can be obtained through the calculation of electromotive force equation, where k is the voltage transformation ratio, $N_1$ and $N_2$ represents the number of winding turns at the primary side and the number of winding turns at the secondary side respectively, $U_{1N}$ and $U_{2N}$ represents the effective value of AC voltage across the primary winding and the secondary winding, respectively.

$$k = \frac{e_1}{e_2} = \frac{N_1}{N_2} \approx \frac{U_{1N}}{U_{2N}} \qquad (7)$$

It can be seen from the above formula that the voltage transformation ratio k may be controlled by regulating the number of winding turns at the primary side and the secondary side of a transformer, to make a step-up or step-down transformer. In an implementable mode, the effective value of the AC voltage of the wireless charging transmitting coil will be increased to n times of the voltage at the primary side only by configuring the number of winding turns at the secondary side of the AC voltage regulation circuit to be n times of the number of winding turns at the primary side. In this way, the required voltage output can be obtained by selecting an appropriate multiple relationship, so that the regulation of the input voltage of the transmitting coil according to the set voltage regulation amplitude is realized.

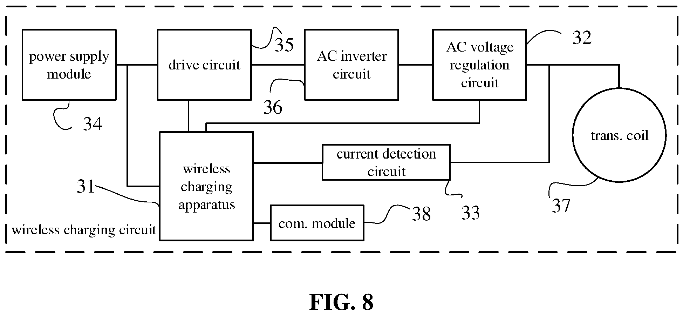

Fig. 8 is another schematic structural diagram of a wireless charging circuit. According to an embodiment of the present disclosure, as shown in Fig. 8, the wireless charging circuit may further include a power supply module 34, a drive circuit 35, an AC inverter circuit 36, a transmitting coil 37 and a communication module 38. The power supply module 34, the drive circuit 35, the AC inverter circuit 36, the AC voltage regulation circuit 32 and the transmitting coil 37 are connected in sequence. The wireless charging apparatus 31 is connected to the power supply module 34, the drive circuit 35 and the communication module 38, respectively.

According to an embodiment of the present disclosure, for the charging power requirements of different load devices, the wireless charging apparatus 31 at the transmitting end for wireless charging can actively regulate and control the AC voltage regulation circuit 32, detect and feed back the current entering the transmitting coil 37 through the current detection circuit 33, and regulate the input voltage of the transmitting coil by the set voltage regulation amplitude until one of the input current of the transmitting coil and the input voltage of the transmitting coil meets the corresponding set condition, so as to determine the input current corresponding to a time point when the set condition is met as the target input current.

According to an embodiment of the present disclosure, the wireless charging apparatus 31 is connected to the AC voltage regulation circuit 32, the current detection circuit 33, the drive circuit 35 and the communication module 38, and is mainly responsible for controlling the AC voltage regulation circuit 32 to output the corresponding voltage, controlling the drive circuit 35 to realize AC inversion, collecting feedback signals from the current detection circuit 33 and making corresponding control actions, and performing information interaction and processing with the communication module 38. The current detection circuit 33 may detect the input current after boosting, and feed back the detected value to the wireless charging apparatus 31. The drive circuit 35 is connected to the AC inverter circuit 36, and is responsible for driving the switch transistors and other components in the AC inverter circuit 36. The AC inverter circuit 36 inverts the DC into AC. In this way, the energy is transmitted between the transmitting coil and the receiving coil in a high-voltage and low-current manner, which not only ensures the transmission power unchanged, but also greatly reduces the heat generated by the coil, thus solving the problem of excessive heat generated by the wireless charging coil, and ensuring that the fast wireless charging will not exit because of over-high temperature of the coil when the load is charged with high power.

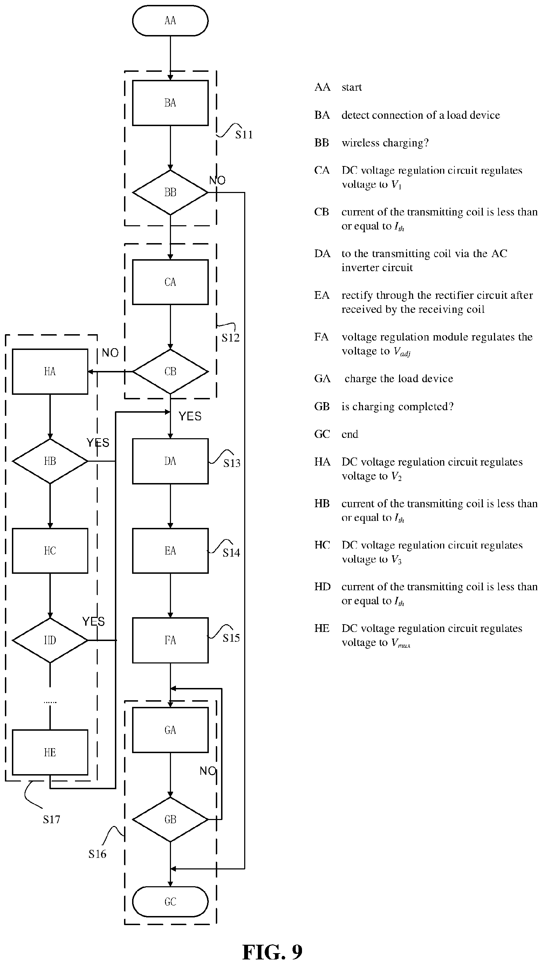

The operating process of the wireless charging circuit shown in Figs. 4 and 6 according to an embodiment of the present disclosure will be further explained in detail through a specific example. Referring to Fig. 9, which is a flow diagram of a wireless charging method implemented by the wireless charging circuit including the DC voltage regulation circuit 22, the wireless charging method may include steps of S11 to S17.

In a step of S11, the wireless charging apparatus 21 at the transmitting end for wireless charging (i.e., the wireless charging circuit shown in Figs. 4 and 6) detects whether there is a load device needed to be wirelessly charged, and if yes, the process skips to step S12; if no, the process ends.

In a step of S12, when it is detected that there is a load device needed to be wirelessly charged, the DC voltage regulation circuit 22 at the transmitting end increases the voltage to $V_1$, and the current detection circuit 23 detects whether an output current of the DC voltage regulation circuit 22 is less than or equal to a current threshold $I_{th}$, and if yes, the process skips to step S13; if not, the process skips to step S17.

In a step of S13, if the output current of the DC voltage regulation circuit 22 is less than or equal to the current threshold $I_{th}$, an input current corresponding to a time point when the set condition is met (the output current of the DC voltage regulation circuit 22) is determined as a target current, which is sent to the transmitting coil 27 after passing through the AC inverter circuit 26.

In a step of S14, the receiving coil is inductively coupled with the transmitting coil 27, and a rectifier module at the receiving end rectifies the coupled high-voltage AC through a rectifier circuit.

In a step of S15, the voltage regulation module at the receiving end reduces the high-voltage DC to a voltage value $V_{adj}$ required by a load.

In a step of S16, the load device judges that the charging is completed, and the wireless charging process ends.

In a step of S17, if the output current of the DC voltage regulation circuit 22 is greater than $I_{th}$, the DC voltage regulation circuit 22 increases the voltage to $V_2$; then whether the output current is less than or equal to $I_{th}$ is judged; if the output current is less than or equal to $I_{th}$, the process skips to step S13; if not, the process skips to step S17, until the output current of a DC boost module is less than or equal to $I_{th}$ or the voltage has been increased to a rated maximum voltage value $V_{max}$; and then the process returns to step S13 to continue execution.

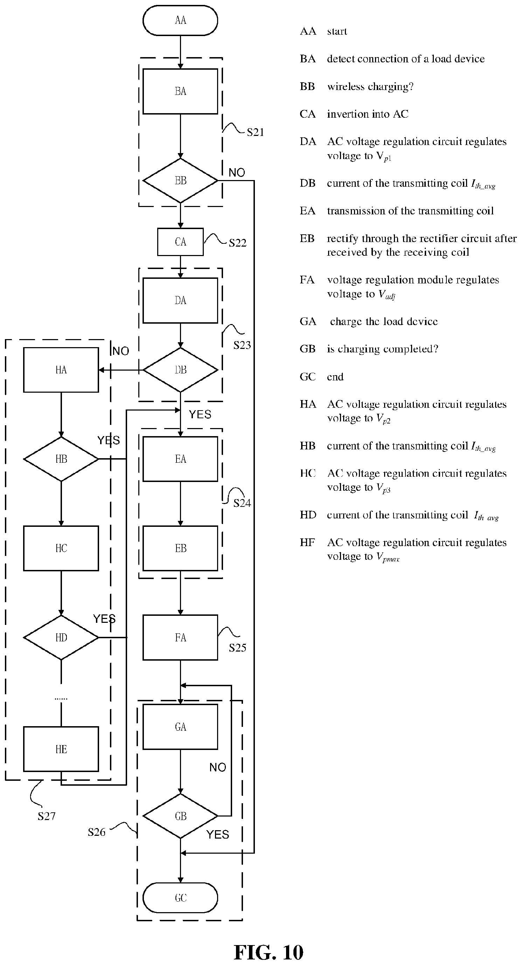

The working process of the wireless charging circuit shown in Figs. 7 and 8 according to an embodiment of the present disclosure will be further explained in detail through another specific example. Referring to Fig. 10, it is a flow diagram of the wireless charging method implemented by the wireless charging circuit including the AC voltage regulation circuit 32. The wireless charging method may include steps of S21 to S27.

In a step of S21, the wireless charging apparatus 31 at the transmitting end for wireless charging (i.e., the wireless charging circuit shown in Figs. 7 and 8) detects whether there is a load device needed to be wirelessly charged, and if yes, the process skips to step S22; if no, the process ends.

In a step of S22, when it is detected that there is a load device needed to be wirelessly charged, the wireless charging circuit inverts DC into AC through the AC inverter circuit 36; and then the process skips to step S23.

In a step of S23, the AC voltage regulation circuit 32 increases a peak value of the AC voltage to $V_{p1}$, and the current detection circuit 33 detects whether an average value of an output current of the AC voltage regulation circuit 32 is less than or equal to a current threshold $I_{th\_avg}$; if yes, stop regulating the input voltage, and the input current corresponding to a time point when the set condition is met is determined as a target current, which is sent to the transmitting coil 37, then the process skips to step S24; if not, the process skips to step S27.

In a step of S24, the receiving coil is inductively coupled with the transmitting coil 27, and a rectifier module at the receiving end rectifies the coupled high-voltage AC through a rectifier circuit; and then the process skips to step S25.

In a step of S25, the voltage regulation module at the receiving end reduces the high-voltage DC to a voltage value $V_{adj}$ required by a load; and then the process skips to step S26.

In a step of S26, the load device judges that the charging is completed, and the wireless charging process ends.

In a step of S27, if an average value of the current input current of the AC voltage regulation circuit 32 is greater than a threshold current $I_{th\_avg}$, the AC voltage regulation circuit 32 continues to increase the peak value of the AC voltage to $V_{p2}$; then whether the average value of the input current is less than or equal to the threshold current $I_{th\_avg}$ is judged; if yes, the process skips to step S24; if not, the process skips to step S27, until the average value of the input current of the AC voltage regulation circuit 32 is less than or equal to $I_{th\_avg}$ or the voltage has been increased to a rated maximum peak voltage $V_{pmax}$; and then the process returns to step S24 to continue execution.

According to an embodiment of the present disclosure, by means of regulating one of the input current and the input voltage of the transmitting coil to meet the corresponding set condition, on the one hand, the input current can be reduced by increasing the voltage value of the input voltage to reduce heat generated by the coil; on the other hand, the wireless charging efficiency can be improved on the premise of reducing heat generated by the coil by setting a reasonable voltage regulation amplitude and an input current threshold; and finally, when wireless charging is carried out at a relatively high power, fast wireless charging in the whole charging process can be completed without being restricted by heat generated by the coil.

Those skilled in the art will appreciate that embodiments of the present disclosure may be provided as methods, systems, or computer program products. Accordingly, the present disclosure may take the form of a hardware embodiment, a software embodiment, or an embodiment incorporating software and hardware aspects. Furthermore, the present disclosure may take the form of a computer program product implemented on one or more computer-usable storage media (including, but not limited to, a magnetic disk memory, an optical memory, and the like) in which computer-usable program code is contained.

The foregoing is merely embodiments of the present disclosure and is not intended to limit the protection scope of the present disclosure. Any modifications, equivalent substitutions, improvements, etc. made within the principle and scope of the present disclosure are included within the protection scope of the present disclosure.

**Claims**

1. A wireless charging method, comprising:

   detecting by a wireless charging apparatus a current input current of a transmitting coil;
   regulating an input voltage of the transmitting coil according to a set voltage regulation amplitude in response to determining that the current input current is greater than a current threshold until the regulated input current is not greater than the current threshold or the input voltage corresponding to the regulated input current is not less than a voltage threshold; and
   determining the regulated input current as a target input current.

2. The wireless charging method of claim 1, wherein the regulating an input voltage of the transmitting coil according to a set voltage regulation amplitude in response to determining that the current input current is greater than a current threshold until the regulated input current is not greater than the current threshold or the input voltage corresponding to the regulated input current is not less than a voltage threshold comprises:

cyclically executing the following steps in response to determining that the current input current is greater than the current threshold, until it is determined that the regulated input current is equal to or less than the current threshold or the input voltage corresponding to the regulated input current is not less than the voltage threshold:

    increasing the input voltage of the transmitting coil by taking the set voltage regulation amplitude as a step size; detecting the regulated input current and the input voltage corresponding to the regulated input current; and judging whether the regulated input current is equal to or less than the current threshold, and judging whether the input voltage corresponding to the regulated input current is not less than the voltage threshold.

3.  The wireless charging method of claim 1, wherein the regulating an input voltage of the transmitting coil according to a set voltage regulation amplitude in response to determining that the current input current is greater than a current threshold until the regulated input current is not greater than the current threshold or the input voltage corresponding to the regulated input current is not less than a voltage threshold comprises:
regulating the input voltage of the transmitting coil according to the set voltage regulation amplitude in response to determining that the current input current is greater than the current threshold, until the regulated input current is less than or equal to the current threshold and the input voltage corresponding to the regulated input current is not greater than the voltage threshold.

4.  The wireless charging method of claim 1, wherein the regulating an input voltage of the transmitting coil according to a set voltage regulation amplitude in response to determining that the current input current is greater than a current threshold until the regulated input current is not greater than the current threshold or the input voltage corresponding to the regulated input current is not less than a voltage threshold comprises:
regulating the input voltage of the transmitting coil according to the set voltage regulation amplitude in response to determining that the current input current is greater than the current threshold, until the regulated input current is greater than the current threshold and the input voltage corresponding to the regulated input current is not less than the voltage threshold.

5.  The wireless charging method of claim 1, further comprising:
before the detecting by a wireless charging apparatus a current input current of the transmitting coil,
determining by the wireless charging apparatus that the wireless charging apparatus is connected to a load device.

6.  A wireless charging apparatus, configured to:
detect a current input current of a transmitting coil;
regulate an input voltage of the transmitting coil according to a set voltage regulation amplitude in response to determining that the current input current is greater than a current threshold, until the regulated input current is not greater than the current threshold or the input voltage corresponding to the regulated input current is not less than a voltage threshold; and
determine the regulated input current as a target input current.

7.  A wireless charging apparatus, comprising a processor and a memory for storing a computer program capable of running on the processor,
wherein the processor is configured to, when running the computer program, perform the wireless charging method of any of claims 1 to 5.

8.  A wireless charging circuit, comprising the wireless charging apparatus of claim 6 or 7, a DC voltage regulation circuit and a current detection circuit which are connected to the wireless charging apparatus, wherein the wireless charging apparatus is configured to output the target input current by controlling the DC voltage regulation circuit.

9.  The wireless charging circuit of claim 8, further comprising a power supply module, a drive circuit, an AC inverter circuit, a transmitting coil and a communication module,
wherein the power supply module, the DC voltage regulation circuit, the drive circuit, the AC inverter circuit and the transmitting coil are connected in sequence, and the wireless charging apparatus is connected to the power supply module, the drive circuit and the communication module respectively.

10.  A wireless charging circuit, comprising the wireless charging apparatus of claim 6 or 7, an AC voltage regulation circuit and a current detection circuit which are connected to the wireless charging apparatus, wherein the wireless charging apparatus is configured to output the target input current by controlling the AC voltage regulation circuit.

**11.** The wireless charging circuit of claim 10, further comprising a power supply module, a drive circuit, an AC inverter circuit, a transmitting coil and a communication module,
wherein the power supply module, the drive circuit, the AC inverter circuit, the AC voltage regulation circuit and the transmitting coil are connected in sequence, and the wireless charging apparatus is connected to the power supply module, the drive circuit and the communication module respectively.

**12.** A computer storage medium storing a computer program which, when executed by a processor, causes the processor to perform the wireless charging method of any of claims 1 to 5.

a wireless charging apparatus detects a current input current of a transmitting coil — 101

an input voltage of the transmitting coil is regulated according to a set voltage regulation amplitude in response to determining that the current input current is greater than a current threshold, until the regulated input current is not greater than the current threshold or the input voltage corresponding to the regulated input current is not less than a voltage threshold — 102

the regulated input current is determined as a target input current — 103

**FIG. 1**

processor — 210

213

memory — 211

network interface — 212

**FIG. 2**

| wireless charging apparatus | 21 |

| DC voltage regulation circuit | 22 |

| current detection circuit | 23 |

**FIG. 3**

transmitting end for wireless charging: power supply module — drive circuit — AC inverter circuit — trans. coil; control circuit at trans. end; com. module

receiving end for wireless charging: rec. coil — rectifier circuit — voltage regulation module — charging management module — load device; com. module; control circuit at receiving end

**FIG. 4**

$L$  $D$

$i = i_L$

$U_S$  $+$  $-$

$T$  $+$  $u_T$  $-$

$i_C$

$C$

$i_0$

$R$  $+$  $u_0$  $-$

**FIG. 5**

**FIG. 6**

**FIG. 7**

**FIG. 8**

**FIG. 9**

AA    start

BA    detect connection of a load device

BB    wireless charging?

CA    DC voltage regulation circuit regulates voltage to $V_1$

CB    current of the transmitting coil is less than or equal to $I_{th}$

DA    to the transmitting coil via the AC inverter circuit

EA    rectify through the rectifier circuit after received by the receiving coil

FA    voltage regulation module regulates the voltage to $V_{adj}$

GA    charge the load device

GB    is charging completed?

GC    end

HA    DC voltage regulation circuit regulates voltage to $V_2$

HB    current of the transmitting coil is less than or equal to $I_{th}$

HC    DC voltage regulation circuit regulates voltage to $V_3$

HD    current of the transmitting coil is less than or equal to $I_{th}$

HE    DC voltage regulation circuit regulates voltage to $V_{max}$

FIG. 10

AA    start

BA    detect connection of a load device

BB    wireless charging?

CA    invertion into AC

DA    AC voltage regulation circuit regulates
      voltage to $V_{p1}$

DB    current of the transmitting coil $I_{th\_avg}$

EA    transmission of the transmitting coil

EB    rectify through the rectifier circuit after
      received by the receiving coil

FA    voltage regulation module regulates
      voltage to $V_{adj}$

GA     charge the load device

GB    is charging completed?

GC    end

HA    AC voltage regulation circuit regulates
      voltage to $V_{p2}$

HB    current of the transmitting coil $I_{th\_avg}$

HC    AC voltage regulation circuit regulates
      voltage to $V_{p3}$

HD    current of the transmitting coil $I_{th\_avg}$

HF    AC voltage regulation circuit regulates
      voltage to $V_{pmax}$

## INTERNATIONAL SEARCH REPORT

| International application No. |
|---|
| **PCT/CN2019/099210** |

| **A.** | **CLASSIFICATION OF SUBJECT MATTER** |
|---|---|
| | H02J 7/04(2006.01)i |

According to International Patent Classification (IPC) or to both national classification and IPC

| **B.** | **FIELDS SEARCHED** |
|---|---|

Minimum documentation searched (classification system followed by classification symbols)

H02J; H02M

Documentation searched other than minimum documentation to the extent that such documents are included in the fields searched

Electronic data base consulted during the international search (name of data base and, where practicable, search terms used)

CNPAT, EPODOC, WPI, CNKI: 无线, 充电, 输入, 电流, 电压, 温度, 热, wireless, charge, input, current, voltage, temperature, hot, heat

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 104011963 A (TEXAS INSTRUMENTS INC.) 27 August 2014 (2014-08-27) description, paragraphs [0023] and [0025], and figures 1-4 | 1-12 |
| A | CN 108233506 A (MEIZU TECHNOLOGY CO., LTD.) 29 June 2018 (2018-06-29) entire document | 1-12 |
| A | CN 107528369 A (NUBIA TECHNOLOGY CO., LTD.) 29 December 2017 (2017-12-29) entire document | 1-12 |
| A | CN 104584381 A (NITTO DENKO CORPORATION) 29 April 2015 (2015-04-29) entire document | 1-12 |
| A | CN 107645188 A (ZHENGZHOU YUNHAI INFORMATION TECH CO., LTD.) 30 January 2018 (2018-01-30) entire document | 1-12 |
| A | US 2017117753 A1 (THE BOARD OF TRUSTEES OF THE LELAND STANFORD JUNIOR UNIVERSITY) 27 April 2017 (2017-04-27) entire document | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2019** | **06 November 2019** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/099210**

| Patent document cited in search report | | | Publication date (day/month/year) | Patent family member(s) | | | Publication date (day/month/year) |
|---|---|---|---|---|---|---|---|
| CN | 104011963 | A | 27 August 2014 | US | 2019214850 | A1 | 11 July 2019 |
| | | | | CN | 104011963 | B | 10 October 2017 |
| | | | | JP | 2015503890 | A | 02 February 2015 |
| | | | | JP | 6069349 | B2 | 01 February 2017 |
| | | | | US | 2016301244 | A1 | 13 October 2016 |
| | | | | US | 2013162200 | A1 | 27 June 2013 |
| | | | | WO | 2013096167 | A1 | 27 June 2013 |
| CN | 108233506 | A | 29 June 2018 | None | | | |
| CN | 107528369 | A | 29 December 2017 | None | | | |
| CN | 104584381 | A | 29 April 2015 | WO | 2014148143 | A1 | 25 September 2014 |
| | | | | CN | 104584381 | B | 26 April 2017 |
| | | | | EP | 2869432 | A1 | 06 May 2015 |
| | | | | JP | 2014183660 | A | 29 September 2014 |
| | | | | JP | 6169380 | B2 | 26 July 2017 |
| | | | | EP | 2869432 | A4 | 04 May 2016 |
| | | | | US | 2015311742 | A1 | 29 October 2015 |
| | | | | KR | 20150032570 | A | 26 March 2015 |
| | | | | TW | I542110 | B | 11 July 2016 |
| | | | | TW | 201445849 | A | 01 December 2014 |
| | | | | SG | 11201500731 | A1 | 28 May 2015 |
| CN | 107645188 | A | 30 January 2018 | None | | | |
| US | 2017117753 | A1 | 27 April 2017 | US | 10177606 | B2 | 08 January 2019 |

Form PCT/ISA/210 (patent family annex) (January 2015)